# EUROPEAN PATENT APPLICATION

(11) **EP 4 212 232 A1**
(43) Date of publication of application: **19.07.2023**
(21) Application number: 22217212.4
(22) Date of filing: 29.12.2022
(51) Int. Cl.: B01D 53/04, B01D 53/75, B01D 53/78, F23G 5/50, F23J 15/02, F23J 15/04

(54) **METHOD FOR EXTRACTING ACID FROM FLUE GAS FROM COMBUSTION OF CHLORINE-COMPRISING MATERIAL AND PRODUCT OBTAINED**

(30) Priority: 30.12.2021 BE 202106118
(71) Applicant: Indaver nv, 9130 Beveren (BE)
(72) Inventor: ALDERWEIRELDT, Nick, 9130 Beveren (BE); NELISSEN, Tom, 9130 Beveren (BE)
(74) Representative: Brantsandpatents bv

(57) **Abstract**

The invention relates to a method for obtaining an acidic liquid from flue gas originating from the combustion of chlorine-comprising material, in which at least the following steps are applied:
the removal of solid particles from the flue gas via a two-field electrofilter;
absorbing hydrochloric acid from the flue gas in at least one absorption column with packing material whereby a solution is obtained; and
adsorbing pollutants in the solution on one or more activated carbon filters, whereby an acidic liquid is obtained, wherein the solution has a concentration of HCl of at least 3 wt%.

The invention also relates to a device for purifying flue gas, and also relates to purified flue gas per se.

## Description

### TECHNICAL FIELD

The invention relates to a method for obtaining an acidic liquid from flue gas from the combustion of chlorine-comprising material, and to an acidic liquid obtained per se.

### PRIOR ART

The main contaminants or pollutants present in flue gas from incinerators for the combustion of chlorine-comprising material, such as liquid waste material, biomass, residual products or hydrocarbons with a high sulfur content, are carbon monoxide, unburned hydrocarbons, sulfur oxides (SOx), hydrogen chloride (HCl) and other hydrogen halides (HF, HBr), nitrogen oxides (NOx), heavy metals, polychlorinated biphenyls (PCBs), dioxins and other halogenated aromatic and aliphatic hydrocarbons. It is important that the flue gas can be cleaned so that it meets the established emission values for emissions.

For example, WO 2003 002 912 describes a combustion device for integrated heat recovery and flue gas purification, which comprises at least the following essentially integrated sections: (a) a combustion chamber or incinerator; (b) a heat recovery section; (c) one or more acid removal sections; (d) one or more DeNOx sections; (e) a stepped dedusting section; (f) one or more sections for the removal of chlorinated hydrocarbons; (g) an adapted measuring and control section for controlling the various steps of flue gas cleaning and heat recovery. The invention further comprises the use of such an integrated incinerator for incinerating polluted combustible substances, such as waste, for instance household and industrial waste. WO '912 describes the capture of pollutants by means of an absorbent such as quicklime, calcium hydroxide, limestone or sodium carbonate.

RU 2429 900 describes a method for the treatment of flue gas produced during combustion in a boiler and containing NOx, SOx and mercury, consisting of the addition of a mercury halogenating compound and ammonia to the flue gas. The metallic mercury (Hg⁰) is halogenated to HgCl₂ in the presence of HC!. The flue gas is then desulfurized. Finally, the halogenated mercury is removed with an alkaline absorbent solution.

US20190201841 describes a method for removing contaminants from a hot flue gas stream. In the first step, the flue gas stream passes through a gas conditioning chamber. The gas conditioning chamber contains nozzles which dispense a suspension formed by adding an alkaline reagent selected from the group of alkaline reagents comprising limestone, hydrated lime, lime or improved lime to water.

WO2003002912 describes the desulfurization and removal of haloid acids. Absorbents are injected into the flue gases, leading to the formation of sulfur oxides and halogenated salts in the flue gases. The absorbents, for example quicklime, calcium hydroxide, sodium carbonate and/or limestone, are injected at a high temperature, so that SOx and haloid compounds are captured at the earliest possible stage. The sulphate salts are captured together with the fly ash.

The known processes do not aim to obtain a high-quality product. They focus on the purification of flue gases and are not applicable for the combustion of materials containing chlorine, such as solvents. Often these known methods use bases and they obtain neutralized solutions with high salt concentrations which are difficult to further exploit. Environmental standards are becoming stricter and old processes do not meet current strict environmental standards.

In many known processes, filters have to remove large quantities of salts from the gas stream. These salts are obtained by neutralizing the acids in the gas stream with an excess of strong base, usually based on lime.

The present invention aims to find an improvement over these methods. For example, some of these methods use toxic products to remove pollutants from the flue gases or produce non-reusable waste streams.

### SUMMARY OF THE INVENTION

In a first aspect, the invention relates to a method for obtaining an acidic liquid from flue gas originating from the combustion of chlorine-comprising material according to claim 1. Preferred forms of the method are shown in claims 2 to 11.

The method comprises a first cleaning step in which solid particles are removed from the flue gas. This is followed by an absorption step in which the acid, mainly HCl, is absorbed in an aqueous solution. Finally, this solution is further cleaned by adsorption. The absorbent will remove a large amount of hydrochloric acid from the flue gases during the first step, as a result of which the concentration of hydrochloric acid in the solution obtained is very high. The second step, with activated carbon, is mainly necessary to remove organic components from the solution, for example. This results in a valuable acidic solution and purified flue gas. This method has the effect that less waste is obtained because the obtained liquid is used as a catalyst or raw material due to its high acid concentration, especially hydrochloric acid.

In a second aspect, the invention relates to a device for carrying out the method for obtaining an acidic liquid from flue gas originating from the combustion of chlorine-comprising material according to the first aspect, according to claim 10. Preferred embodiments of the device are shown in claim 11.

In a third aspect, the invention relates to an acidic liquid obtained by the method according to the first aspect, according to claim 12. Preferred forms of the liquid are set out in claims 13 to 15.

### DESCRIPTION OF THE FIGURES

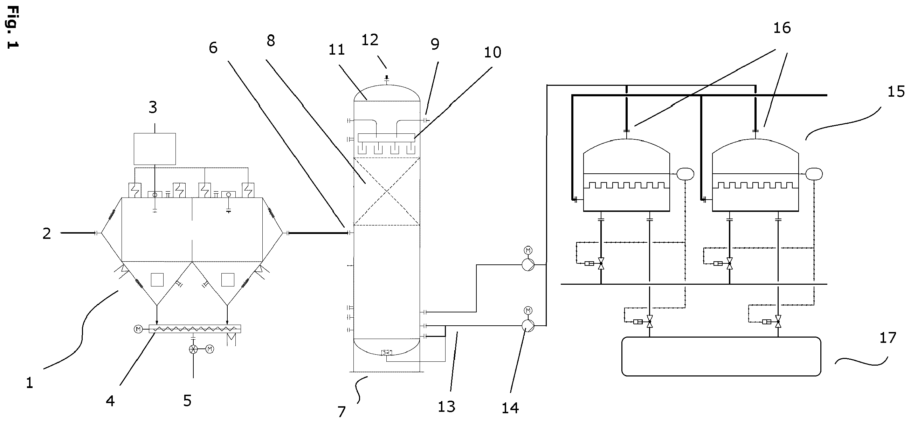

**Fig. 1** shows a schematic representation of a method and device for purifying flue gas originating from the combustion of chlorine-comprising material, for example liquid waste material, according to embodiments of the invention.

### DETAILED DESCRIPTION

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

The terms "comprise", "comprising", "consist of", "consisting of", "provided with", "include", "including", "contain", "containing", are synonyms and are inclusive or open terms that indicate the presence of what follows, and which do not exclude or prevent the presence of other components, characteristics, elements, members, steps, as known from or disclosed in the prior art.

Quoting numerical intervals by endpoints comprises all integers, fractions and/or real numbers between the endpoints, these endpoints included.

The term "dioxins", as used in this text, can be understood as unwanted combustion by-products, especially from incomplete combustion, which are a large family of molecules that share the common feature of having two benzene rings. These rings are linked through one or two oxygen atoms and contain chlorine atoms. Dioxins are therefore formed from carbon, hydrogen, chlorine and oxygen. Not all dioxins are equally toxic. The toxicity increases with the number of chlorine atoms at the corners of the benzene rings. The most toxic dioxin is the so-called Seveso dioxin or 2,3,7,8-tetrachlorodibenzodioxin (2,3,7,8-TCDD).

The term "adsorbent" in this document refers to a substance that adsorbs, and in particular to a solid that has the property of attaching other substances to its surface without any covalent bond. A well-known example of an adsorbent is activated carbon.

The term "activated carbon" in this document refers to a form of carbon that is processed to have small pores with a small volume that increase the surface area available for adsorption or chemical reactions. This includes activated carbon obtained from a carbon-rich product, such as wood, peat, coal, lignite, coke, coconut husk, fruit kernels, coal. Preferably, the activated charcoal is obtained from charcoal.

The expression 'percentage by weight' or "wt%," here and throughout the text, refers to the relative weight of a respective component based on the total weight of a composition of components.

"Washing columns" or "absorption columns" or "gas scrubbers" are reactors within which pollutants are removed from a gas stream. A "packed bed" may be provided. This packed bed is a solid material that improves absorption, for example by increasing the contact surface between the pollutants and the absorbent. If a packed bed or packing material is used, this is referred to as a "packed column."

In a first aspect, the invention relates to a method for obtaining an acidic liquid from flue gas originating from the combustion of chlorine-comprising material, in which at least the following steps are applied:
the removal of solid particles from the flue gas via a two-field electrofilter;
absorbing hydrochloric acid from the flue gas in at least one absorption column with packing material, whereby a solution is obtained; and
adsorbing pollutants in the solution on one or more activated carbon filters, whereby an acidic liquid is obtained,
wherein the solution has a concentration of HCl of at least 3%, preferably at least 7%, more preferably at least 10 wt%, even more preferably at least 20 wt%.

Because a two-field electrofilter is used, fewer pollutants have to be removed from the flue gas during absorption. The two-field electrofilter, for example, removes particles > 0.5 mm, salts and metals. As a result, after absorption, a purer absorbent is obtained. A two-field electrofilter still catches dust if one field were to fail. A three-field electrofilter is not necessary to meet the emission standard for dust in the flue-gas stack. The incinerated waste creates little dust in the system. The purpose of this filter is to provide a removal of dust (including metal chlorides) and thus give the hydrochloric acid a better quality.

According to an embodiment, at least the following steps are applied:
first, the removal of solid particles from the flue gas via a two-field electrofilter;
then, absorbing hydrochloric acid from the flue gas in at least one absorption column with packing material, whereby a solution is obtained; and
then, adsorbing pollutants in the solution on one or more activated carbon filters, whereby an acidic liquid is obtained,
wherein an absorbent is brought into contact with the flue gas during absorption and consists of at least 90 wt% water and a pH lower than 7.

The sequence of first sending the flue gases through the electrofilter and only then through the absorption columns ensures a lower load on the absorption columns. The purpose of the electrofilter is to be a "sink" of a number of pollutants. Salts and metals are trapped in the electrofilter. This deliberately improves the quality of the hydrochloric acid. It is clear that the removal of particles increases the efficiency in the absorption columns. Such particles could otherwise, for example, clog the packing material. A hydrochloric acid solution of high purity would not be obtained in this way. The prior art also does not mention an absorption column with packing material.

In the methods described in the prior art, the filter is used to remove, for example, NaCl or CaCl₂. According to the present invention less salts will be formed since the flue gas is not subjected to a scrubbing step with bases, such as NaOH or Ca(OH)₂.

According to an embodiment, the absorbent entering the packed columns has a pH of less than 7, preferably less than 5, more preferably less than 1. Because the flue gas in the packed columns does not come into contact with an absorbent with a pH > 7, preferably > 5, the HCl is not neutralized. According to an embodiment, the concentration of HCl in the absorbent in the packed columns increases from 0.5-3 wt% to 20-35 wt%, preferably from 1-2 wt% to 20-30 wt%. According to an embodiment, the absorbent is recirculated over the packed columns until the HCl concentration in the absorbent is 10-35 wt%, preferably 20-30 wt%. According to an embodiment, the absorption of hydrochloric acid from the flue gas continues in at least 2 absorption columns with packing material, wherein at least a portion of the absorbent per column is separately recirculated over each absorption column with packing material. According to an embodiment, there are three packed columns, and the absorbent is recirculated over the packed column through which the flue gas flows last until the HCl concentration in the absorbent is 2-5 wt%. According to a further embodiment, the absorbent is recirculated over the packed column through which the flue gas flows second, until the HCl concentration in the absorbent is 12-20 wt%. According to a further embodiment, the absorbent is recirculated over the packed column through which the flue gas flows first until the HCl concentration in the absorbent reaches 20-30 wt%.

According to an embodiment, an absorbent is brought into contact with the flue gas during absorption and consists of at least 90 wt% water, preferably at least 95 wt% water. Due to the use of an aqueous solution, a pure acidic solution is obtained which can be used as a catalyst or as a reagent. Because the absorbent is an aqueous solution, the flue gas is purified before absorption and the solution is purified over an activated carbon filter, a high-purity hydrochloric acid solution is obtained, suitable for use in the agrochemical industry, for example.

In an embodiment, at least a portion of the absorbent is recirculated over the absorption column. According to a further embodiment, at least part of the absorbent is recirculated over at least 2 packed beds. The packed columns are equipped with recirculation pumps which can recirculate the absorbent over different beds. A packed column can contain 1 or more packed beds. In an embodiment, two packed columns are provided with two packed beds per column. Recirculation over these beds ensures a high concentration of HCl in the absorbent. The concentration of HCl in these packed columns rises from 0.5-3 wt% to 20-30 wt%. Halfway, i.e. between the first and second column, the absorbent contains 5-17 wt% hydrochloric acid. In this way, more hydrochloric acid dissolves per liter of absorbent used. In addition, an absorbent with a high concentration of hydrochloric acid is obtained that can be used in other applications, possibly after further purification.

According to an embodiment, during the absorption step, 90 wt% of the hydrochloric acid in the flue gas ends up in the absorbent, more preferably 97 wt%, even more preferably 99 wt%. As a result, the purified flue gas obtained contains a concentration of hydrochloric acid lower than 50 mg/Nm³ and preferably lower than 10 mg/Nm³ on a daily basis.

In an embodiment, the absorbent contains no added chemicals. By added chemicals is meant: no solids, salts, organic substances, polymers, bases or acids. The absorbent consists mainly of water, preferably process water. This limits the use of absorbent and water. According to an embodiment, the absorbent has a pH of less than 7, preferably less than 6. This allows the chlorine to dissolve as much as possible as acid and the pH of the absorbent after absorbing is as low as possible. Should the pH of the absorbent exceed 7, the hydrochloric acid would neutralize during absorption, which would not result in a valuable product.

According to an embodiment, the absorbent is distributed over a packing material, preferably with a droplet size greater than 0.1 mm, preferably greater than 0.5 mm and thus without atomizing it. Atomizing requires more energy compared to spraying. Since the water over the packed bed has a long contact time with the flue gases, reducing the droplet size is not necessary, and therefore atomizing is not necessary. According to a further embodiment, the packing material comprises a plastic, preferably the plastic comprises polypropylene, Teflon, polyethylene, polyvinylidene difluoride, a phenyl formaldehyde resin, glass, asbestos, basalt, vinyl ester, polyester, a similar polymer or a combination thereof. According to an embodiment, the packing material comprises polyvinylidene fluoride. Polyvinylidene fluoride is very acid resistant and suitable for use as a packing material at high temperatures. Polypropylene is acid resistant but not dimensionally stable at these temperatures. In an embodiment, the absorbent is distributed over the packing material via liquid distribution troughs above the packing beds. The absorbent flows through an open tube into the troughs and over the packing material.

Good packing material is important to obtain a high HCl concentration in the acidic liquid. The contact surface must be large for a good exchange between the flue gas with a lot of chlorine and the absorbent with a pH < 7. The packing material provides a pressure drop per theoretical stage of 0.1 - 2.0 mbar, preferably 0.3 - 1.0 mbar. At 70-80% flooding, the pressure drop is approximately 2 mbar/m. The minimum liquid load is approximately 0.2 m³/m²h. The maximum liquid load is at least 200 m³/m²h. Because packing material is used, the contact surface between liquid and gas is greatly increased, which improves the transfer of chlorine from the gas phase to the liquid phase. If no packing material were present, the columns would have to be at least 10 times larger to achieve the same removal of chlorine. In an embodiment, the packing material is structured packing. The removal of HCl from flue gas without the use of additives such as NaOH or Ca(OH)₂ requires a large exchange surface.

According to an embodiment, the packing material comprises at least 70 wt% of C-PVC (post-chlorinated PVC), polyvinylidene fluoride (PVDF) or a composition based on Bisphenol A and epoxy vinyl ester resin, preferably the packing material consists of PVDF or C-PVC. According to an embodiment, the packing material comprises plates, preferably these plates are located substantially vertically side by side in the column, more preferably the plates are corrugated, preferably diagonally corrugated, more preferably the plates are placed crossed over each other. This creates more turbulence. According to an embodiment, the plates are perforated. According to an embodiment, a reactor cross-section comprises 5-50 plates per m², preferably 10-25. In an embodiment, the packing material comprises diagonally corrugated sheets of polyvinylidene fluoride substantially vertically side by side in the column at a minimum distance of 1-15 cm between each other and a maximum distance of 10-30 cm between each other, preferably at a minimum distance of 1-10 cm between each other and a maximum distance of 12-30 cm between each other. The plates are preferably placed staggered next to each other. So, for example, the first plate is corrugated along the diagonals from bottom left to top right, and the next plate is corrugated from top left to bottom right. Because the plates are corrugated, a minimum and maximum distance between the plates can be measured by taking a cross-section of the column and constructing straight lines that pass through at least 2 bending points of a plate.

Polyvinylidene fluoride is acid resistant and strong enough to be used as a packing material under these conditions. The temperature is high, and the pH is low, preferably below 0. Because the flue gases are not scrubbed with bases, as in the methods known in the prior art, the packing material is exposed to much harsher conditions. In an embodiment, the packing material comprises diagonally corrugated plates placed substantially vertically side by side in the column.

According to an embodiment, the absorption of pollutants continues in three packed columns, a pump being provided for each column, suitable for recirculating the liquid over each column. As a result, a product with a high HCl concentration can be obtained and the concentration of HCl in the product can be properly controlled. Even with changing waste streams that are incinerated, a product can be obtained with a similar HCl concentration. Preferably the HCl concentration in the final product is 15-35 wt%, more preferably 18-27 wt%. Preferably, the flue gas stream and the liquid stream run in opposite directions. This results in a better adsorption of HCl in the liquid. According to an embodiment, the absorption of hydrochloric acid from the flue gas continues in 3 absorption columns with packing material, wherein at least a portion of the absorbent is recirculated over each absorption column.

The activated carbon filter removes pollutants from the solution, not from the flue gases as in some methods described in the prior art. The acidic solution obtained by the method described herein has a high purity and a high value.

According to an embodiment, the absorption continues at negative pressure. This is caused by an induced draught fan which, when in use, reduces the pressure in the absorption columns. This avoids the release of flue gas into the atmosphere in the event of a leak.

According to an embodiment, droplets are removed from the gas stream after absorption. Preferably, after the wet absorption and before the activated carbon filter, the flue gas is flowed through a demister to separate liquid droplets. As a result, fewer water droplets come into contact with the activated carbon filter, resulting in better adsorption. In some cases, these droplets are sent back to the packed columns.

The method has the effect of enabling a thorough cleaning of the flue gas in terms of removal of said acidic pollutants. The preferred method has the effect that the most efficient possible removal of said acid pollutants can be obtained, without the use of toxic absorption products and with a valuable product as a result.

The method for the production of hydrochloric acid thus comprises a first absorption step, then an adsorption step. The absorbent will remove a large amount of hydrochloric acid from the flue gases during the first step, as a result of which the concentration of hydrochloric acid in the solution obtained is very high. The second step, with activated carbon, is mainly necessary to remove pollutants (such as furans) from the solution. The obtained acidic liquid can be used as a raw material because of its high acid concentration.

In a second aspect, the invention relates to a device for carrying out the method according to the first aspect or any of the preceding embodiments, comprising one or more gas scrubbers and one or more activated carbon filters.

According to an embodiment, the activated carbon filter uses various qualities of non-impregnated activated carbon for the removal of, for example, dioxins and TOC (e.g. furans). To further improve the affinity of activated carbon for certain components, it can be impregnated with chemicals. This creates chemisorption, which enhances the removal properties of activated carbon. The activated carbon filter uses, according to an embodiment, impregnated and catalytic activated carbon for the removal of inorganic components (Hg, NH₃, H₂S, etc.). The activated carbon filter, according to an embodiment, uses a combination of non-impregnated activated carbon and impregnated and catalytic activated carbon.

According to an embodiment, the device further comprises an induced draught fan, adapted to reduce the pressure in at least one absorption column. As a result, in the event of a small leak, no flue gas will leave the installation via this leak.

According to an embodiment, the device further comprises a conductivity meter for measuring the conductivity of liquid after it leaves the gas scrubber. This embodiment has the effect that in this way it can be quantitatively decided whether the load on the gas scrubber is acceptable.

According to an embodiment, provisions are further made to purify and reuse process water after gas scrubbing. For example, polluted process water, also known as blowdown, is preferably used as an absorbent.

In a third aspect, the invention relates to an acidic liquid obtained according to the method described in the first aspect, wherein the liquid has a concentration of HCl of at least 3 wt%, preferably 5-37 wt%, more preferably 10-35 wt% and even more preferably 20-33 wt%. According to an embodiment, the liquid has a PCB concentration of less than 1 mg/kg. According to an embodiment, the liquid has a lead concentration of less than 1 mg/kg. According to an embodiment, the liquid has a concentration of 3-Chlorophenol lower than 0.1 mg/kg. If the acidic solution is used in the agricultural industry, in consumer goods or in bulk chemicals, it must meet certain requirements. PCBs, heavy metals, chlorophenols and alkylphenols are unwanted pollutants in many processes. Through the use of activated carbon and good combustion, an acidic liquid with a high HCl concentration but a low concentration of pollutants can be obtained from the absorbent.

This high concentration is obtained by recirculating at least a portion of the absorbent leaving each of the packed columns back over the same column. For comparison, the HCl concentration in pure HCl is about 37%. The purity of the acidic liquid is therefore particularly high, since the acidic liquid is recovered from flue gases obtained after the incineration of waste, such as liquids from the chemical industry, such as chlorinated solvents. The pH of the acidic liquid is therefore substantially 0. According to an embodiment, the HCl concentration of the acidic liquid is 6-8 M.

In what follows, the invention is described by way of non-limiting examples illustrating the invention, and which are not intended to and should not be interpreted as limiting the scope of the invention.

### EXAM PLES

For advantages and technical effects of elements described below in the Examples, reference is made to the advantages and technical effects of corresponding elements described above in the detailed description.

### EXAMPLE 1

Example 1 relates to a method and a device for purifying flue gas originating from the combustion of chlorine-comprising material, for obtaining an HCl solution from flue gas originating from the combustion of chlorine-comprising material, according to embodiments of the invention. The method and device according to Example 1 are schematically illustrated in Fig. 1. In Fig. 1, parts of the device are indicated by numbers.

According to Example 1, flue gas cleaning is applied to a flue gas obtained by the combustion of chlorine-comprising waste in an incinerator (not shown in Fig. 1). A selective non-catalytic reduction (SNCR) system may be installed in the incinerator. With the SNCR system, urea is added to the flue gas as a reducing agent at a high temperature (because it is present in the incinerator), reducing nitrogen oxides to N₂, water and CO₂.

After any SNCR, the flue gas is further purified in an electrostatic fly ash filter 1. Here, solid particles are removed from the flue gas. The flue gas enters the electrostatic fly ash filter 1 via the inlet 2. An electric charge is given to the ash particles via a transformer 3 and the charged particles are then guided along large electrically charged plates. Because the particles are attracted by their electrical counterpart, they stick to these plates. Hammers regularly strike these plates, causing the caked dust layer to come loose, and fall into a hopper. A screw 4 takes them to a storage silo 5. The storage silo 5 is a container of approximately 1 m³ in which the fly ash particles are collected.

The flue gas, which is virtually free of solid particles, will then flow to the inlet 6 of the absorption column 7. In the absorption column 7, a removal of acidic pollutants comprising HCl, SO₂ and HF is carried out. The flue gas enters the absorption column along the inlet 6 along the side. The gases come into contact with the absorbent, mainly water, in the packed bed 8. The absorbent is sprayed in via a spray system 10 along the side at the top 9 and slowly percolates through the packed bed 8. An absorbent according to Example 1 is injected by means of this spray system for the absorption of hydrochloric acid. This counterflow of flue gas and water allows optimum water use. The flue gas will pass through a demister 11 to stop droplets of absorbent and leave the absorption column 7 via outlet 12. The absorbent flows down through the packed bed. The packed bed provides a larger contact surface between the absorbent and the flue gas, which will cause more pollutants to dissolve in the water. The solution is pumped to the activated carbon filter 15 via the outlet 13 at the bottom of the absorption column, using a pump 14.

The solution contains high acid concentrations but also organic pollutants such as furans. In order to use the solution as a raw material, the quality must be high. The inlet 16 for the obtained solution is at the top of the activated carbon filter. This solution is distributed over the activated carbon. At least two activated carbon filters are installed in each case so that at least one is always working. Depending on the required cleaning time, the optimal filter arrangement can be determined. Preferably, the device contains five carbon filters. The number of carbon filters depends on the flue gas volume, which in turn is determined by the amount of liquids that are burned in the furnace. The purified absorbent, i.e. the liquid obtained, flows into a storage tank 17. This acidic liquid has a high quality and can be used in a different process.

If necessary, several absorption columns are set up. A quench (not shown in Fig. 1) may also be provided for the absorption column 7 to perform a first wash and further cool the flue gas.

Throughout the process, water is circulated, aiming for a pH lower than 7. Absorbent used in the absorption column will possibly be treated process water. The water from other absorption columns (not in Fig. 1) which further clean the flue gas, also referred to as washing water or process water, is used as an absorbent in the absorption column 7. The acidic absorbent obtained is subjected to a conductivity test, performed by a conductivity meter. This can be used to determine whether the system is overloaded or underloaded. In this way, the process can be controlled to obtain a constant concentration of hydrochloric acid.
1 electrostatic fly ash filter
2 flue gas inlet
3 transformer
4 screw
5 fly ash storage silo
6 flue gas inlet
7 absorption column
8 packed bed
9 absorbent inlet
10 spray system
11 demister
12 flue gas outlet
13 solution outlet
14 pump
15 activated carbon filter
16 solution inlet
17 acidic liquid storage tank

### EXAMPLE 2

Example 2 relates to a purified flue gas obtained by means of a method and device according to this invention. The purified flue gas originates from the combustion of chlorine-comprising waste. The composition of the purified flue gas is shown in Table 1. Measurements were carried out in the flue-gas stack through which the purified flue gases were emitted to the environment.

**Table 1. Composition of a purified flue gas.**

| Parameter | Time base | Measured value |
|---|---|---|
| Total dust | daily average | < 10 mg/Nm³ |
| carbon monoxide (CO) | daily average | < 50 mg/Nm³ |
| | 10-minute average | < 150 mg/Nm³ |
| gaseous and vaporous organic substances, expressed as total organic carbon (TOC) | daily average | < 10 mg/Nm³ |
| gaseous inorganic chlorides, expressed as HCl | daily average | < 10 mg/Nm³ |
| gaseous inorganic fluorides, expressed as HF | continuous measurement | < 1mg/Nm³ |
| Sulfur dioxide, expressed as SO₂ | daily average | < 50 mg/Nm³ |
| Nitrogen oxides (NOₓ), expressed as NO₂ | daily average | < 200 mg/Nm³ |
| Sum of Cd and Tl | discontinuous measurement (2 × per year) | < 0.05 mg/Nm³ |
| Hg | discontinuous measurement (2 × per year) | < 0.05 mg/Nm³ |
| Sum of Sb, As, Pb, Cr, Co, Cu, Mn, Ni, V, and Sn | discontinuous measurement (2 × per year) | < 0.5 mg/Nm³ |
| dioxins / furans | continuous (14-day) | < 0.1 ng TEQ/Nm³ |
| | continuous measurement (2 × per year) | < 0.1 ng TEQ/Nm³ |

### Example 3:

Example 3 relates to an analysis of a hydrochloric acid solution obtained by means of a method and device described in Figure 1. Chlorophenols and alkylphenols were measured according to CMA/3/K & WAC/IV/A/001, metals according to EN-ISO11885, calorific value according to CMA/2/II/A.5, anions according to CMA/2/I/C.3, PCBs according to CMA/3/I. The results in Table 2 show that the amount of several pollutants is very limited. For most components, the concentration is below the detection limit. The heating value was measured according to CMA/2/II/A.5 and was 11.1 MJ/kg. The pH is less than 3. The value of many pollutants is lower than the detection limit and is displayed as such.

**Table 2: concentration of pollutants in hydrochloric acid obtained**

| **Pollutant** | **Concentration (mg/kg)** |
|---|---|
| **Chlorophenols and alkylphenols** | |
| 3-Chlorophenol | < 0.10 |
| 4-Chlorophenol | < 0.10 |
| 2,3,4-Trichlorophenol | < 0.10 |
| 2,3,4,5-Tetrachlorophenol | < 0.10 |

| **Metals** | |
|---|---|
| Antimony | < 1.0 |
| Cadmium | < 1.0 |
| Chromium | 2.5 |
| Copper | 9.8 |
| Lead | < 1.0 |
| Zinc | < 1.0 |

| **Anions** | |
|---|---|
| Total bromine | 1500 |
| Total fluorine | 62 |
| Total sulfur | 100 |

| **PCB** | |
|---|---|
| PCB 28 | < 0.18 |
| PCB 52 | < 0.18 |
| PCB 101 | < 0.18 |
| PCB 118 | < 0.18 |
| PCB 138 | < 0.18 |
| PCB 153 | < 0.18 |
| PCB 180 | < 0.18 |

## Claims

1. Method for obtaining an acidic liquid from flue gas originating from the combustion of chlorine-comprising material, in which at least the following steps are applied:
- first, the removal of solid particles from the flue gas via a two-field electrofilter;
- then, absorbing hydrochloric acid from the flue gas in at least one absorption column with packing material whereby a solution is obtained; and
- then, adsorbing pollutants in the solution on one or more activated carbon filters, whereby an acidic liquid is obtained,
**characterized in, that** an absorbent is brought into contact with the flue gas during absorption and consists of at least 90 wt% water and a pH lower than 7.

2. Method according to claim 1, wherein the packing material comprises polyvinylidene difluoride.

3. Method according to claim 1 or 2, wherein at least a portion of the absorbent is recirculated over the absorption column.

4. Method according to claim 3, wherein at least part of the absorbent is recirculated over at least 2 packed beds.

5. Method according to any of claims 1 to 4, wherein the packing material comprises diagonally corrugated plates, placed substantially vertically side by side in the column.

6. Method according to any of claims 1 to 5, wherein the absorbent is distributed over the packing material, preferably with a droplet size greater than 0.1 mm.

7. Method according to any of claims 1 to 6, wherein the absorbent flows through the absorption column in the opposite direction of flow to the flue gas.

8. Method according to any of claims 1 to 7, whereby droplets are removed from the gas stream after absorption.

9. Method according to any of claims 1 to 8, wherein the absorption of hydrochloric acid from the flue gas continues in at least 2 absorption columns with packing material, wherein at least a portion of the absorbent per column is separately recirculated over each absorption column with packing material.

10. Device for carrying out the method according to any of claims 1 to 9, comprising one or more gas scrubbers and one or more activated carbon filters.

11. Device according to claim 10, wherein the device further comprises an induced draught fan, adapted to reduce the pressure in at least one absorption column.

12. Acidic liquid obtained according to the method described in any of claims 1 to 9, **characterized in that**, the liquid has a concentration of HCl of 20-33 wt%.

13. Acidic liquid according to claim 12, **characterized in that** the liquid has a PCB concentration of less than 1 mg/kg.

14. Acidic liquid according to claim 12 or 13, **characterized in that** the liquid has a lead concentration of less than 1 mg/kg.

15. Acidic liquid according to any of claims 12 to 14, **characterized in that** the liquid has a concentration of 3-Chlorophenol lower than 0.1 mg/kg.
